# EUROPEAN PATENT APPLICATION

(11) **EP 4 776 250 A1**
(43) Date of publication of application: **15.07.2026**
(21) Application number: 25151322.2
(22) Date of filing: 10.01.2025
(51) Int. Cl.: G07C 9/00

(54) **VEHICLE ACCESS SYSTEM AND OPERATING METHOD**

(71) Applicant: NXP B.V., 5656 AG Eindhoven (NL)
(72) Inventor: Haslinger, Dorian, 5656 AE Eindhoven (NL); Panji, Vineeth, 5656 AE Eindhoven (NL)
(74) Representative: Krott, Michel

(57) **Abstract**

In accordance with a first aspect of the present disclosure, a vehicle access system is provided, comprising: a near field communication (NFC) front-end, wherein said NFC front-end comprises a first secure element; an access controller operatively coupled to the NFC front-end, wherein said access controller comprises a second secure element configured to verify data provided by the first secure element; wherein the first secure element and the second secure element are configured to establish a secure communication channel for transmitting said data from the first secure element to the second secure element. In accordance with further aspects of the present disclosure, a corresponding method of operating a vehicle access system is conceived, and a computer program for carrying out said method is provided.

## Description

### TECHNICAL FIELD

The present disclosure relates to a vehicle access system. Furthermore, the present disclosure relates to a corresponding method of operating a vehicle access system, and to a computer program for carrying out said method.

### BACKGROUND

Vehicle access systems allow users of a vehicle to access said vehicle in a convenient manner. Vehicle access systems may contain near field communication (NFC) nodes which are integrated into certain parts of a vehicle, such as a door handle. In that case, a user may bring his or her mobile device (e.g., a smart phone) in close proximity of an NFC node, in order to start a vehicle access transaction in which user credentials are transmitted to a secure domain (i.e., a secure element) within the vehicle. Similarly, a user may bring his or her mobile device in close proximity of another NFC node (e.g., mounted within the vehicle), in order to start a vehicle engine start transaction in which user credentials are transmitted to the secure domain within the vehicle. In these scenarios, it is important that the vehicle is not accessed, or the engine is not started, by a malicious party.

### SUMMARY

In accordance with a first aspect of the present disclosure, a vehicle access system is provided, comprising: a near field communication (NFC) front-end, wherein said NFC front-end comprises a first secure element; an access controller operatively coupled to the NFC front-end, wherein said access controller comprises a second secure element configured to verify data provided by the first secure element; wherein the first secure element and the second secure element are configured to establish a secure communication channel for transmitting said data from the first secure element to the second secure element.

In one or more embodiments, the first secure element and the second secure element are configured to establish said secure communication channel by encrypting, respectively decrypting, said data using one or more shared secret keys.

In one or more embodiments, the secret keys have been shared using a Diffie-Hellman key exchange process.

In one or more embodiments, the shared secret keys are periodically refreshed.

In one or more embodiments, the first secure element and the second secure element are configured to establish the secure communication channel before a vehicle access transaction is started by the vehicle access system.

In one or more embodiments, the first secure element and the second secure element are configured to establish the secure communication channel before an engine start transaction is started by the vehicle access system.

In one or more embodiments, the data comprise user credentials for enabling access to the vehicle or to one or more functions of the vehicle.

In one or more embodiments, a vehicle comprises the vehicle access system of any preceding claim.

In one or more embodiments, the vehicle comprises an in-vehicle network for operatively coupling the access controller to the NFC front-end.

In accordance with a second aspect of the present disclosure, a method of operating a vehicle access system is conceived, wherein the vehicle access system comprises a near field communication (NFC) front-end including a first secure element, and an access controller including a second secure element, the method comprising: establishing, by the first secure element and the second secure element, a secure communication channel for transmitting data from the first secure element to the second secure element; providing, by the first secure element, said data to the second secure element by transmitting said data through the secure communication channel; verifying, by the second secure element, the data provided by the first secure element.

In one or more embodiments, the first secure element and the second secure element establish said secure communication channel by encrypting, respectively decrypting, said data using one or more shared secret keys.

In one or more embodiments, the secret keys have been shared using a Diffie-Hellman key exchange process.

In one or more embodiments, the shared secret keys are periodically refreshed.

In accordance with a third aspect of the present disclosure, a computer program is provided, comprising executable instructions which, when executed by a vehicle access system of the kind set forth, cause said vehicle access system to carry out a method of the kind set forth.

### DESCRIPTION OF DRAWINGS

Embodiments will be described in more detail with reference to the appended drawings.
Fig. 1 shows an example of a relay attack on an NFC-based vehicle access system.
Fig. 2 shows an example of an NFC node for use in a vehicle.
Fig. 3 shows an illustrative embodiment of a vehicle access system.
Fig. 4 shows an illustrative embodiment of a method of operating a vehicle access system.
Fig. 5 shows another illustrative embodiment of a method of operating a vehicle access system.
Fig. 6 shows a further illustrative embodiment of a method of operating a vehicle access system.

### DESCRIPTION OF EMBODIMENTS

Vehicle access systems allow users of a vehicle to access said vehicle in a convenient manner, but they are also vulnerable, in the sense that they are susceptible to so-called relay attacks. A relay attack is an attack which is typically performed on classic vehicle access systems using low frequency (LF) or ultra-high frequency (UHF) communication technology. In order to complicate such relay attacks, vehicle access systems based on ultra-wideband (UWB) communication may be used. However, vehicle access systems may also deploy near field communication (NFC) as a back-up vehicle access solution, or as a low-cost vehicle access solution. For example an NFC-enabled smart card may be used to access a vehicle, instead of a key fob. Such an NFC-based vehicle access system is susceptible to relay attacks.

An NFC-enabled vehicle access system may contain one or more so-called NFC nodes, which are integrated into a vehicle at locations which can easily be accessed by a user. For example, an NFC node may be embedded in a door handle, such that a user may bring his NFC-enabled access device (e.g., a smart card) into proximity of the door handle in order to unlock the vehicle. In another example, an NFC node may be embedded in a designated part of the vehicle cabin, such that a user may bring his NFC-enabled access device in close proximity of said designated part in order to start the engine. An NFC node of this kind is typically connected to an in-vehicle network, such as private controller area network (CAN) or a local interconnect network (LIN). NFC-based vehicle access systems are typically not protected against a relay attack performed on the in-vehicle network, for example on the CAN bus or the serial peripheral interface (SPI) connected to the NFC node. For example, an attack may be performed by by-passing the NFC node completely and applying a relay between the secure NFC chip of the access device (e.g., a smart card) and the in-vehicle network.

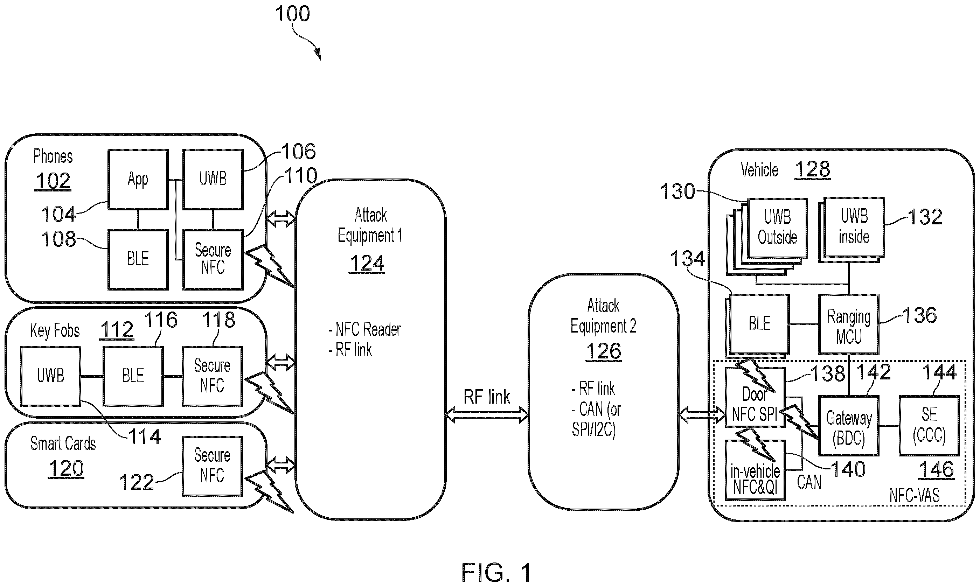

**Fig. 1** shows an example of a relay attack 100 on an NFC-based vehicle access system 146. In this example, an NFC-based vehicle access system 146 comprises two NFC nodes 138, 140, one of which is installed within a door handle (i.e., NFC node 138) and one of which is integrated into a physical unit within the vehicle, which also contains a Qi-charging element (i.e., NFC node 140). Furthermore, the vehicle access system 146 comprises a secure element 144 which is operatively coupled to the NFC nodes 138, 140 through a gateway 142, and which may form part of an access controller (not shown) of the vehicle 128. It is noted that the vehicle 128 contains other components, i.e., UWB communication units 130 mounted on the exterior of the vehicle 128, UWB communication units 132 mounted within the vehicle 128, one or more Bluetooth low energy (BLE) communication units 134, and a ranging microcontroller 136, which may also provide functionality for enabling access to the vehicle 128. However, in this example, the relay attack is performed on the NFC-based vehicle access system 146.

Typically, an external NFC-enabled access device is used to obtain access to the vehicle 128 or to one or more of its functions. In Fig. 1, several examples of such an access device are shown: NFC-enabled phones 102, NFC-enabled key fobs 112, and NFC-enabled smart cards 120. Each of these access devices contains a secure NFC unit 110, 118, 122 for communicating with the NFC-enabled vehicle access system 146 integrated into the vehicle 128. Typically, such an access device is brought into close proximity of the NFC-enabled vehicle access system 146, i.e., within the communication range of NFC. The communication range of NFC is typically in the order of centimeters (e.g., 10 centimeters or less). However, in this example, a relay attack is carried using a first attack equipment 124 and a second attack equipment 126, by means of which it is attempted to obtain access to the vehicle 128. The first attack equipment 124 is carried by a first attacker and held in close proximity of the vehicle owner's access device, in order to obtain user credentials using NFC. The second attack equipment 126, which communicates with the first attack equipment 124 over a large-distance RF link, is carried by a second attacker who collaborates with the first attacker. The second attack equipment 126 is able to communicate directly with an interface unit that provides direct access to the secure element 144 via an in-vehicle network (e.g., a CAN interface unit, a SPI unit, or I2C unit), i.e., access that bypasses the NFC front-end (not shown) integrated into the NFC nodes 138, 140.

More specifically, a thief may connect the second attack equipment 126 to the interface which is typically used for obtaining vehicle access, for example a private CAN, or the SPI lines of the NFC nodes 138, 140. In this way, the NFC front-ends of the NFC nodes 138, 140 are effectively bypassed. It is noted that if the communication protocol is unknown, the thief can use the second attack equipment 126 to listen to the plain protocol used between the NFC front-ends and the microcontrollers included in the NFC nodes 138, 140, between the microcontrollers and CAN interface units included in said NFC nodes 138, 140, or between the CAN interface units of the NFC nodes 128, 140 and the CAN itself. Through the large-distance RF link (e.g., a sub GHz, BLE, or Wi-Fi link) the second attack equipment 126 obtains the user credentials from the first attack equipment 124, converts them to the used protocol format, and transmits them to the secure element 144 of the vehicle access system 146. In this way, the user credentials are provided to the secure element 144 without near field communication between the second attack equipment 126 and the NFC front-ends integrated into the NFC nodes 138, 140.

As mentioned above, in order to obtain the user credentials using NFC, an accomplice of the thief has brought the first attack equipment 124 into proximity of the vehicle owner's access device. More specifically, the accomplice places the first attack equipment 124 close to the NFC interface of the secure NFC unit 110, 118, 122 of the access device carried by the owner (i.e., a phone 102, a key fob 112, or a smart card 120). The first attack equipment 124 activates the protocol layer 4 of the secure NFC unit 110, 118, 122 (i.e., the application layer as defined in the technical standard ISO 14443-4), and sends a select application identifier (AID) to the NFC CCC digital key (DK) application. Following a successful response the first attack equipment 124 then wakes up, for example, the private CAN of the vehicle 128 and starts an authentication process via the second attack equipment 126.

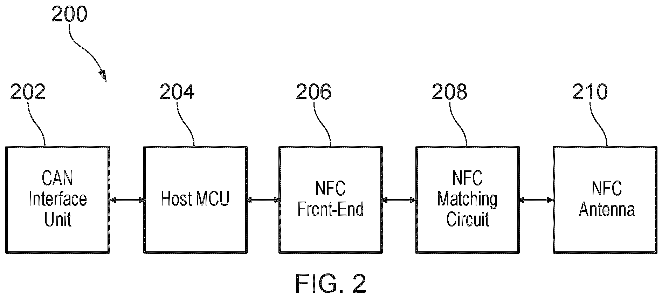

**Fig. 2** shows an example of an NFC node 200 for use in a vehicle. The NFC node 200 comprises a CAN interface unit 202, a host microcontroller 204, an NFC front-end 206, an NFC matching circuit 208, and an NFC antenna 210. As explained above with reference to Fig. 1, relay attacks may be targeted at different components of an NFC-enabled vehicle system, thereby bypassing the NFC front-end 206 of the NFC node 200. For example, an attack on the CAN connector (not shown) of the vehicle itself may be performed. It is relatively easy to connect the second attack equipment to an existing CAN connector, and the CAN protocol is well-known. Furthermore, an attack may be performed between the CAN interface unit 202 and the host microcontroller 204 of the NFC node 200. This is less straightforward because the NFC node 200 is typically a closed system. However, it is still possible, and the protocol is also relatively simple. Similarly, an attack may be performed between the host microcontroller 204 and the NFC front-end 206 of the NFC node 200. Again, this is not straightforward, but it is still possible and the protocol is relatively simple.

Now discussed are a vehicle access system, a corresponding method of operating a vehicle access system, and a computer program for carrying out said method, which facilitate preventing a relay attack of the kind set forth from succeeding.

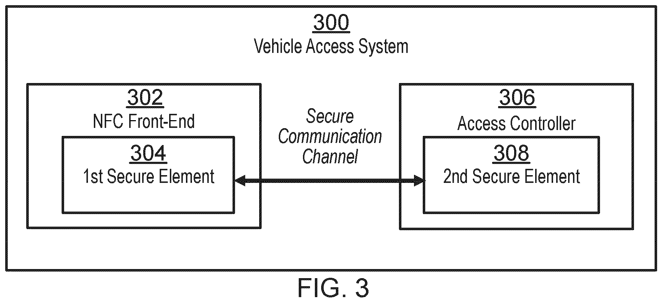

**Fig. 3** shows an illustrative embodiment of a vehicle access system 300. The vehicle access system 300 comprises an NFC front-end 302 and an access controller 306 which are operatively coupled to each other. The NFC front-end 302 comprises a first secure element 304. Furthermore, the access controller 306 comprises a second secure element 308, wherein said second secure element 308 is configured to verify data provided by the first secure element 304. Furthermore, the first secure element 304 and the second secure element 308 are configured to establish a secure communication channel between each other, for transmitting said data from the first secure element 304 to the second secure element 308. By establishing the secure communication channel and providing said data to the second secure element 308 through said secure communication channel, a relay attack of the kind set forth may be prevented from succeeding more easily. It is noted that a secure element may be defined as a tamper-resistant integrated circuit with installed applications, which have a prescribed functionality and a prescribed level of security. Furthermore, a secure element may implement security functions, such as cryptographic functions and authentication functions.

In one or more embodiments, the first secure element and the second secure element are configured to establish said secure communication channel by encrypting, respectively decrypting, said data using one or more shared secret keys. This further facilitates preventing a relay attack of the kind set forth from succeeding. In particular, the NFC front-end can no longer be bypassed, since the second secure element expects that the data have been encrypted by the first secure element included in the NFC front-end, and if an attacker sends data which have not been encrypted as expected, the attempt to decrypt the data, which is done by the second secure element, will fail. In a practical implementation, the secret keys have been shared using a Diffie-Hellman key exchange process. In one or more embodiments, the shared secret keys are periodically refreshed. In this way, the level of security is increased, because it will become more difficult to crack the secret keys used for the encryption of the transmitted data.

In one or more embodiments, the first secure element and the second secure element are configured to establish the secure communication channel before a vehicle access transaction is started by the vehicle access system. This facilitates preventing a relay attack that aims at obtaining access to the vehicle. Furthermore, in one or more embodiments, the first secure element and the second secure element are configured to establish the secure communication channel before an engine start transaction is started by the vehicle access system. This facilitates preventing a relay attack that aims at starting the engine of the vehicle. In one or more embodiments, the data comprise user credentials for enabling access to the vehicle or to one or more functions of the vehicle. In this way, a user authentication process, which is typically carried out in order to enable access to the vehicle or to one or more of its functions, is better protected. The presently disclosed vehicle access system may be integrated into a vehicle. In a practical implementation, the vehicle comprises an in-vehicle network for operatively coupling the access controller to the NFC front-end.

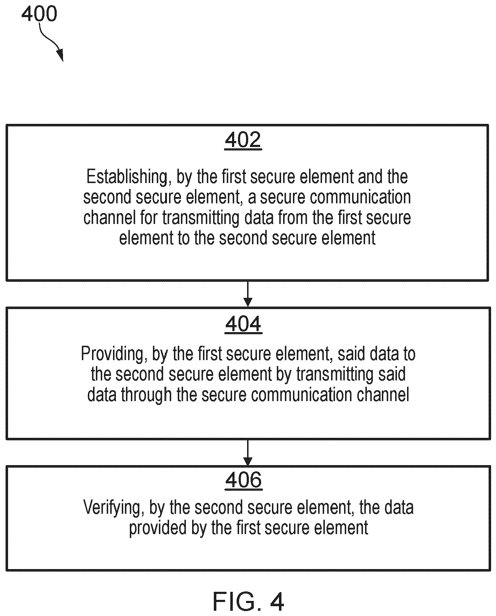

**Fig. 4** shows an illustrative embodiment of a method 400 of operating a vehicle access system, said system comprising an NFC front-end including a first secure element, and an access controller including a second secure element. The method 400 comprises the following steps. At 402, the first secure element and the second secure element establish a secure communication channel for transmitting data from the first secure element to the second secure element. Furthermore, at 404, the first secure element provides said data to the second secure element by transmitting said data through the secure communication channel. Furthermore, at 406, the second secure element verifies the data provided by the first secure element. As mentioned above with reference to the corresponding vehicle access system shown in Fig. 3, by establishing the secure communication channel and providing said data to the second secure element through said secure communication channel, a relay attack of the kind set forth may be prevented from succeeding more easily.

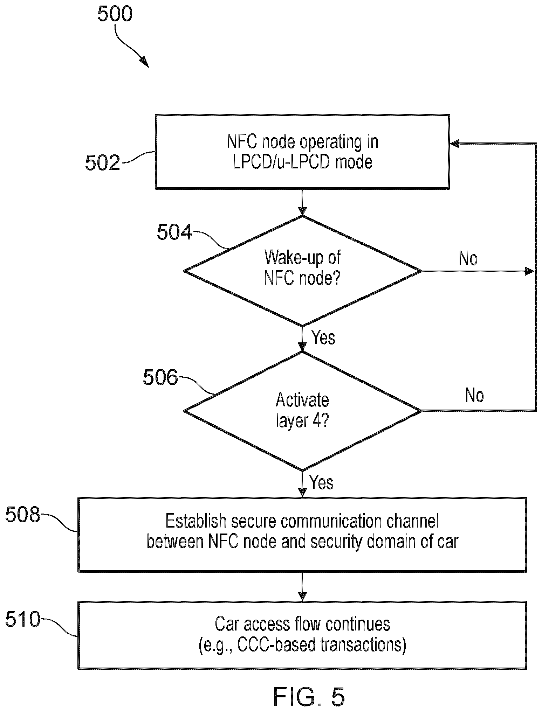

**Fig. 5** shows another illustrative embodiment of a method 500 of operating a vehicle access system. In particular, the method 500 illustrates a use case, in which a car is accessed in a secure way, i.e., in such a way that a relay attack of the kind set forth may be prevented. At 502, aNFC node 502 operates in a low-power card detection (LPCD) or ultra-low-power card detection (u-LPCD) mode. It is noted that LPCD and u-LPCD are techniques for reducing the power consumption of an NFC node, which use short RF sense pulses to detect load changes on their antennas, instead of keeping the RF field active to poll for a communication counterpart. If the LPCD or u-LPCD process triggers a wake-up 504 of the NFC node and the layer 4 is activated 506, a secure communication channel is established 508 between the NFC node and the security domain of the car. Next, the car access flow, which may include CCC-based transactions, continues. If no wake-up 504 is performed or layer 4 is not activated 506, the method 500 returns to step 502.

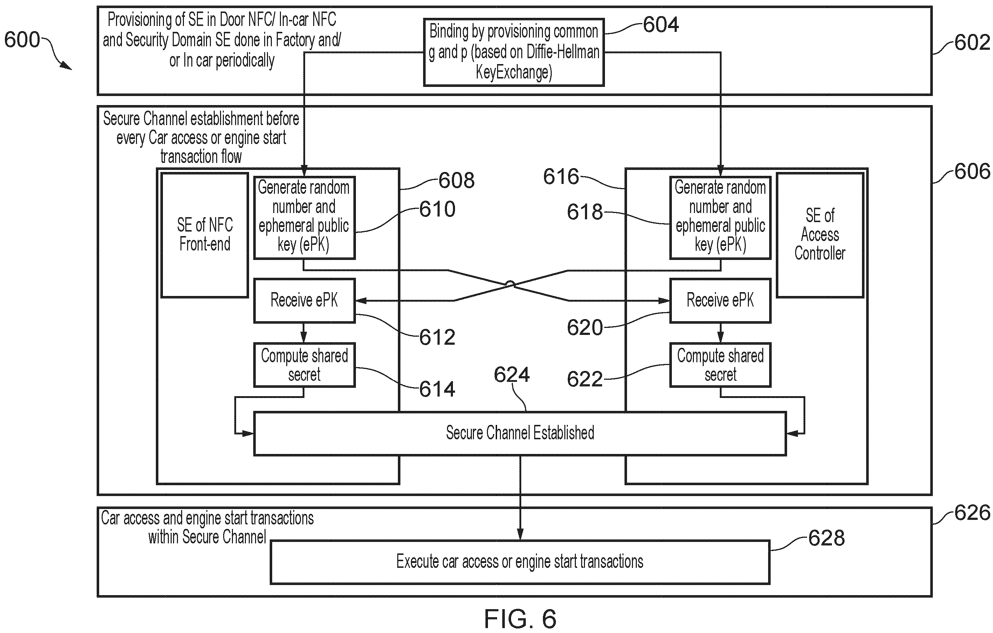

**Fig. 6** shows a further illustrative embodiment of a method 600 of operating a vehicle access system. In particular, the method 600 illustrates a preparatory phase 602, in which the secure element 608 in an NFC front-end of a door NFC node (e.g., an NFC node integrated into a door handle), and the secure element 616 in the security domain of the car (i.e., the access controller), are provisioned. It is noted that this provisioning may be performed in the factory or periodically in the car. In the preparatory phase 602, a binding operation 604 is performed, by provisioning a common g and p based on a Diffie-Hellman key exchange process. In a next phase 606, the secure channel is established. This may be done, for example, before every car access and/or before every engine start transaction flow. The secure channel establishment comprises the following operations performed by the secure elements 608, 616: the generation 610, 618 of ephemeral public keys, the exchange and reception 612, 620 of these ephemeral public keys, and the computation 614, 622 of a shared secret (e.g., one or more secret keys) by means of which the secure channel is established 624. Finally, in the next phase 626, the car access and/or engine start transactions are executed 628 within the secure channel. It is noted that g (generator) and p (modulus) are the two common secrets shared between both binding entities. Both entities then generate their own secret X. With these three vectors (g, p and X), a shareable secret Y is generated using the formula Y = g^Xmod p. Using this method, secrets may be computed which are needed to encrypt data according to Diffie-Hellman algorithm.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: relay attack on a vehicle access system
- 102: phones
- 104: app
- 106: ultra-wideband (UWB) communication unit
- 108: Bluetooth low energy (BLE) communication unit
- 110: secure near field communication (NFC) unit
- 112: key fobs
- 114: UWB communication unit
- 116: BLE communication unit
- 118: secure NFC unit
- 120: smart cards
- 122: secure NFC unit
- 124: attack equipment 1
- 126: attack equipment 2
- 128: vehicle
- 130: UWB communication units (outside)
- 132: UWB communication units (inside)
- 134: BLE communication units
- 136: ranging microcontroller (ranging MCU)
- 138: door NFC node including serial peripheral interface (SPI)
- 140: in-vehicle NFC node combined with Qi-charging unit
- 142: gateway (body domain controller, BDC)
- 144: secure element (Car Connectivity Consortium, CCC, compliant SE)
- 146: NFC-based vehicle access system (NFC-VAS)
- 200: NFC node for use in a vehicle
- 202: controller area network (CAN) interface unit
- 204: host MCU
- 206: NFC front-end
- 208: NFC matching circuit
- 210: NFC antenna
- 300: vehicle access system
- 302: NFC front-end
- 304: first secure element
- 306: access controller
- 308: second secure element
- 400: method of operating a vehicle access system
- 402: establishing, by the first secure element and the second secure element, a secure communication channel for transmitting data from the first secure element to the second secure element
- 404: providing, by the first secure element, said data to the second secure element by transmitting said data through the secure communication channel
- 406: verifying, by the second secure element, the data provided by the first secure element
- 500: method of operating a vehicle access system
- 502: NFC node operating in a low-power card detection, LPCD, or ultra-low-power card detection, u-LPCD, mode
- 504: wake-up of NFC node?
- 506: activate layer 4?
- 508: establish secure communication channel between NFC node and security domain of car
- 510: car access flow continues (e.g., CCC-based transactions)
- 600: method of operating a vehicle access system
- 602: provisioning of SE in door NFC node or in-car NFC node and security domain SE, done in factory and/or periodically in car
- 604: binding by provisioning common g and p (based on Diffie-Hellman Key Exchange)
- 606: secure channel establishment before every car access or engine start transaction flow
- 608: SE of NFC front-end
- 610: generate random number and ephemeral public key (ePK)
- 612: receive ePK
- 614: compute shared secret
- 616: SE of access controller
- 618: generate random number and ephemeral public key (ePK)
- 620: receive ePK
- 622: compute shared secret
- 624: secure channel established
- 626: car access and engine start transactions within secure channel
- 628: execute car access or engine start transactions

## Claims

1. A vehicle access system, comprising:
a near field communication, NFC, front-end, wherein said NFC front-end comprises a first secure element;
an access controller operatively coupled to the NFC front-end, wherein said access controller comprises a second secure element configured to verify data provided by the first secure element;
wherein the first secure element and the second secure element are configured to establish a secure communication channel for transmitting said data from the first secure element to the second secure element.

2. The vehicle access system of claim 1, wherein the first secure element and the second secure element are configured to establish said secure communication channel by encrypting, respectively decrypting, said data using one or more shared secret keys.

3. The vehicle access system of claim 2, wherein the secret keys have been shared using a Diffie-Hellman key exchange process.

4. The vehicle access system of claim 2 or 3, wherein the shared secret keys are periodically refreshed.

5. The vehicle access system of any preceding claim, wherein the first secure element and the second secure element are configured to establish the secure communication channel before a vehicle access transaction is started by the vehicle access system.

6. The vehicle access system of any preceding claim, wherein the first secure element and the second secure element are configured to establish the secure communication channel before an engine start transaction is started by the vehicle access system.

7. The vehicle access system of any preceding claim, wherein the data comprise user credentials for enabling access to the vehicle or to one or more functions of the vehicle.

8. A vehicle comprising the vehicle access system of any preceding claim.

9. The vehicle of claim 8, comprising an in-vehicle network for operatively coupling the access controller to the NFC front-end.

10. A method of operating a vehicle access system, wherein the vehicle access system comprises a near field communication, NFC, front-end including a first secure element, and an access controller including a second secure element, the method comprising:
establishing, by the first secure element and the second secure element, a secure communication channel for transmitting data from the first secure element to the second secure element;
providing, by the first secure element, said data to the second secure element by transmitting said data through the secure communication channel;
verifying, by the second secure element, the data provided by the first secure element.

11. The method of claim 10, wherein the first secure element and the second secure element establish said secure communication channel by encrypting, respectively decrypting, said data using one or more shared secret keys.

12. The method of claim 11, wherein the secret keys have been shared using a Diffie-Hellman key exchange process.

13. The method of claim 11 or 12, wherein the shared secret keys are periodically refreshed.

14. A computer program comprising executable instructions which, when executed by the vehicle access system of any one of claims 1 to 7, cause said vehicle access system to carry out the method of any one of claims 10 to 13.

## Amended claims

### Amended claims in accordance with Rule 137(2) EPC.

1. A vehicle access system (300), comprising:
a near field communication, NFC, front-end (302), wherein said NFC front-end (302) comprises a first secure element (304);
an access controller (306) operatively coupled to the NFC front-end (302), wherein said access controller (306) comprises a second secure element (308) configured to verify data provided by the first secure element (304);
wherein the first secure element (304) and the second secure element (308) are configured to establish a secure communication channel for transmitting said data from the first secure element (304) to the second secure element (308);
**characterized in that** the vehicle access system (300) is integrated into a vehicle comprising an in-vehicle network for operatively coupling the access controller (306) to the NFC front-end (302).

2. The vehicle access system (300) of claim 1, wherein the first secure element (302) and the second secure element (308) are configured to establish said secure communication channel by encrypting, respectively decrypting, said data using one or more shared secret keys.

3. The vehicle access system (300) of claim 2, wherein the secret keys have been shared using a Diffie-Hellman key exchange process.

4. The vehicle access system (300) of claim 2 or 3, wherein the shared secret keys are periodically refreshed.

5. The vehicle access system (300) of any preceding claim, wherein the first secure element (304) and the second secure element (308) are configured to establish the secure communication channel before a vehicle access transaction is started by the vehicle access system (300).

6. The vehicle access system (300) of any preceding claim, wherein the first secure element (304) and the second secure element (308) are configured to establish the secure communication channel before an engine start transaction is started by the vehicle access system (300).

7. The vehicle access system (300) of any preceding claim, wherein the data comprise user credentials for enabling access to the vehicle or to one or more functions of the vehicle.

8. A method (400) of operating a vehicle access system, wherein the vehicle access system comprises a near field communication, NFC, front-end including a first secure element, and an access controller including a second secure element, the method (400) comprising:
establishing (402), by the first secure element and the second secure element, a secure communication channel for transmitting data from the first secure element to the second secure element;
providing (404), by the first secure element, said data to the second secure element by transmitting said data through the secure communication channel;
verifying (406), by the second secure element, the data provided by the first secure element;
**characterized in that** the vehicle access system is integrated into a vehicle comprising an in-vehicle network for operatively coupling the access controller to the NFC front-end.

9. The method (400) of claim 8, wherein the first secure element and the second secure element establish said secure communication channel by encrypting, respectively decrypting, said data using one or more shared secret keys.

10. The method (400) of claim 9, wherein the secret keys have been shared using a Diffie-Hellman key exchange process.

11. The method (400) of claim 9 or 10, wherein the shared secret keys are periodically refreshed.

12. A computer program comprising executable instructions which, when executed by the vehicle access system (300) of any one of claims 1 to 7, cause said vehicle access system (300) to carry out the method (400) of any one of claims 8 to 11.
